# EUROPEAN PATENT SPECIFICATION

(11) **EP 3 192 353 B1**
(45) Date of publication and mention of the grant of the patent: **19.02.2020**
(21) Application number: 17150145.5
(22) Date of filing: 03.01.2017
(51) Int. Cl.: A01G 7/04

(54) **MAGNETIC SHEET FOR PLANT CULTIVATION AND METHOD OF PLANT CULTIVATION**
MAGNETFOLIE ZUR PFLANZENZUCHT UND VERFAHREN ZUR PFLANZENZUCHT
FEUILLE MAGNÉTIQUE POUR LA CULTURE DE PLANTE ET PROCÉDÉ DE CULTURE DE PLANTE

(30) Priority: 12.01.2016 JP 2016003755
(43) Date of publication of application: 19.07.2017
(73) Proprietor: FUJIFILM Corporation, Tokyo 106-8620 (JP)
(72) Inventor: EJIRI, Kiyomi, Minami-Ashigara-Shi Kanagawa 258-8538 (JP)
(74) Representative: Klunker IP Patentanwälte PartG mbB

(56) References cited:
- WO-A1-90/11678
- WO-A1-99/29157
- JP-A- H08 195 307
- JP-A- H09 275 785
- JP-A- 2004 222 628

## Description

### BACKGROUND OF THE INVENTION

### Field of the Invention

The present invention relates to a magnetic sheet for plant cultivation and a method of plant cultivation.

### Description of the Related Art

Magnetic force is known to promote the growth of plants, and methods using magnetic force has been proposed for plant cultivation. As methods of plant cultivation using magnetic force, methods of cultivating plants in, for example, soil mixed with chips obtained by cutting a magnetic tape, or in soil in which magnetic gravel is scattered, are known. In these methods, it is required to separate and remove the chips of the magnetic tape and the like from the soil after completion of plant cultivation from the viewpoint of preventing soil pollution. However, it is difficult to separate chips and the like coexisting in soil.

As a method to solve such problems, a method of cultivating plants in soil covered with a sheet to which magnetism has been imparted is known.

For example, Japanese Utility Model Application Laid-Open (JP-U) No. S60-105142 discloses a hydroponic bed laminate film in which a film formed by kneading a magnetic powder into a plastic and a reinforcing light-blocking film are pasted together.

Japanese Patent Application Laid-Open (JP-A) No. H09-31311 discloses a sheet obtained by mixing a specific polyester block copolymer and a magnetic powder at a specific ratio.

Japanese Utility Model Registration No. 3010455 discloses a magnetic body sheet for plant cultivation, which is obtained by kneading a substance having magnetization properties into a synthetic resin and subjecting the resultant to melt extrusion to process it into sheet form.

### SUMMARY OF THE INVENTION

Here, it is thought that the proportion of resin contained in a sheet should be reduced and the proportion of magnetic powder should be raised, in order to impart magnetic force satisfactory for promoting the growth of plants to a magnetic sheet which is formed by kneading a magnetic powder into a resin, such as the sheets disclosed in JP-U No. S60-105142, JP-A No. H09-31311, and Japanese Utility Model Registration No. 3010455. However, in a case in which the proportion of resin in a sheet is reduced, the breaking strength of the sheet decreases, resulting in difficulties when laying the sheet using a machine, and in a decrease in working efficiency. In addition, in a case in which a sheet having low breaking strength is used for hydroponics, practical problems may occur, such as contamination of a water cycle system by broken pieces of the sheet.
JP H08 195307 A, WO 90/11678 A1, JP H09 275785 A und WO 99/29157 A1 illustrate other magnetic sheets cited for example.

The invention was made in view of the circumstances described above. An aspect of the invention relates to providing a magnetic sheet for plant cultivation, achieved with the independent claim 1, which is capable of promoting the growth of plants and has superior working efficiency. Another aspect of the invention relates to providing a method of plant cultivation using this magnetic sheet, which is achieved according to the independent claim 4.
<1> A magnetic sheet for plant cultivation, comprising:
   a base material; and
   a magnetic layer which is arranged on the base material and comprises a resin and at least one selected from the group consisting of a ferromagnetic powder and a ferrimagnetic powder, wherein a product of residual magnetization and layer thickness of the magnetic layer is 20 mA or higher.
<2> The magnetic sheet for plant cultivation according to <1>, wherein the magnetic layer has a thickness of from 0.2 µm to 10 µm.
<3> The magnetic sheet for plant cultivation according to <1> or <2>, having a breaking strength of 20 MPa or higher, and a breaking elongation of 30% or higher.
<4> The magnetic sheet for plant cultivation according to any one of <1> to <3>, wherein the magnetic layer has a squareness ratio of 0.6 or higher.
<5> A method of plant cultivation, comprising using a magnetic sheet for plant cultivation, the magnetic sheet comprising: a base material; and a magnetic layer which is arranged on the base material and comprises a resin and at least one selected from the group consisting of a ferromagnetic powder and a ferrimagnetic powder, wherein a product of residual magnetization and layer thickness of the magnetic layer is 20 mA or higher.
<6> The method of plant cultivation according to <5>, wherein the magnetic sheet for plant cultivation is used for soil cultivation or hydroponics.
<7> The method of plant cultivation according to <5> or <6>, comprising:
   covering soil with the magnetic sheet for plant cultivation; and
   sowing a seed or planting a seedling in a hole provided in the magnetic sheet which is covering the soil.
<8> The method of plant cultivation according to <5> or <6>, comprising:
   laying the magnetic sheet for plant cultivation on the bottom of a hydroponic bed; and
   sowing a seed or planting a seedling in the hydroponic bed on which the magnetic sheet has been laid.
<9> The method of plant cultivation according to <5> or <6>, comprising:
   covering a surface of a hydroponic solution, which has been supplied to a hydroponic bed, with the magnetic sheet for plant cultivation; and
   sowing a seed or planting a seedling in a hole provided in the magnetic sheet which is covering the surface of the hydroponic solution.
<10> The method of plant cultivation according to any one of <5> to <9>, wherein the magnetic layer has a thickness of from 0.2 µm to 10 µm.
<11> The method of plant cultivation according to any one of <5> to <10>, wherein the magnetic sheet has a breaking strength of 20 MPa or higher, and a breaking elongation of 30% or higher.
<12> The method of plant cultivation according to any one of <5> to <11>, wherein the magnetic layer has a squareness ratio of 0.6 or higher.

According to an aspect of the invention, a magnetic sheet for plant cultivation is provided, which is capable of promoting the growth of plants and has superior working efficiency. According to another aspect of the invention, a method of plant cultivation using this magnetic sheet is provided.

### BRIEF DESCRIPTION OF THE DRAWINGS

Fig. 1 is a graph showing a comparison of the weights of leaves and roots of Japanese radishes at harvest (i.e., the 2.5th month after sowing seeds), which are cultivated in soil by the methods in Test Example 1-1, and Comparative Test Examples 1-1 and 1-2;
Fig. 2 is a graph showing changes in germination rate from sowing seeds to harvesting (i.e., the 7th day after sowing seeds) of white radish sprouts hydroponically cultivated by the methods in Test Example 2-1, and Comparative Test Examples 2-1 and 2-2; and
Fig. 3 is a graph showing a comparison of the plant lengths of white radish sprouts at harvest (i.e., the 7th day after sowing seeds), which are hydroponically cultivated by the methods in Test Examples 2-1 and 2-2, and Comparative Test Examples 2-1 and 2-2.

### DETAILED DESCRIPTION OF THE INVENTION

The specific embodiments of the invention will now be described in detail. It should be noted however that the invention is not limited to the following embodiments, and can be carried out with modifications within the scope of the object of the invention, if appropriate.

The range of the numerical values shown using "to" in the present specification means a range including the numerical values described before and after the "to" as the minimum value and the maximal value, respectively.

In the present specification, in a case in which a plurality of substances corresponding to each component exist in a composition, the amount of each component in the composition means the total amount of the plurality of substances existing in the composition unless otherwise specified.

In the present specification, the term "step" includes an independent step, and as long as, even when a step cannot be distinctly distinguished from other steps, a desired object of the step is achieved, the step is contained in the term.

In the present specification, the "growth of plants" means, for example, the germination of seeds, the elongation of leaves, stems, roots or the like, the growth of fruits, and the like.

### [Magnetic Sheet for Plant Cultivation]

A magnetic sheet for plant cultivation (hereinafter referred to as "magnetic sheet" if appropriate) according to an embodiment includes: a base material; and a magnetic layer which is arranged on the base material and contains a resin and at least one selected from the group consisting of a ferromagnetic powder and a ferrimagnetic powder, and in which the product (Mrt) of residual magnetization (Mr) and layer thickness (t) is 20 mA (i.e., 2 memu/cm²) or higher.

The magnetic sheet according to the embodiment is capable of promoting the growth of plants and has superior working efficiency.

In order to obtain magnetic force sufficient for promoting the growth of plants in conventional magnetic sheets which are formed by kneading a magnetic powder into a resin, it is considered to reduce the proportion of resin contained in a sheet and increase the proportion of magnetic powder. However, in a case in which the proportion of resin in a sheet is reduced, the breaking strength of the sheet decreases, and thus problems such as difficulty in laying of the sheet using a machine or a decrease in working efficiency may occur. In addition, in a case in which a sheet having low breaking strength is used for hydroponics, problems in that a water cycle system is contaminated with broken pieces of the sheet may occur.

The magnetic sheet in the present specification has a magnetic layer which contains a resin and at least one selected from the group consisting of a ferromagnetic powder and a ferrimagnetic powder, and in which the product (Mrt) of residual magnetization (Mr) and layer thickness (t) is 20 mA (i.e., 2 memu/cm²) or higher, and thus is capable of promoting the growth of plants. In addition, the magnetic sheet in the present specification has a structure in which a magnetic layer containing a resin and at least one selected from the group consisting of a ferromagnetic powder and a ferrimagnetic powder is arranged on a base material. Therefore, even when the sheet contains a sufficient amount of magnetic powder for promoting the growth of plants, the sheet has higher mechanical strength and superior efficiency as compared to those of the conventional magnetic sheets which are formed by kneading a magnetic powder into a resin.

In the magnetic sheet in the present specification, the product (Mrt) of residual magnetization (Mr) and layer thickness (t) of a magnetic layer is 20 mA (i.e., 2 memu/cm²) or higher, and preferably 30 mA (i.e., 3 memu/cm²) or higher.

When the Mrt of a magnetic layer is 20 mA (i.e., 2 memu/cm²) or higher, a magnetic sheet is capable of promoting the growth of plants.

The upper limit of the product (Mrt) of residual magnetization (Mr) and layer thickness (t) of a magnetic layer is not particularly limited, and is, for example, preferably 1,200 mA (i.e., 120 memu/cm²) or less from the viewpoint of practicality (e.g., the adhesion between a base material and a magnetic layer, and cost saving).

The residual magnetization (Mr) of a magnetic layer is a value measured in an environment of an atmosphere temperature of 25°C in a condition in which the applied magnetic field is 796 kA/m (i.e., 10 kOe) using a vibrating sample magnetometer.

As a measurement device, for example, VSM-P7 (manufactured by Toei Industry Co., Ltd.) may be suitably used. However, the measurement device is not limited thereto.

The product (Mrt) of residual magnetization (Mr) and layer thickness (t) of a magnetic layer is preferably from 20 mA (i.e., 2 memu/cm²) to 1,200 mA (i.e., 120 memu/cm²), and more preferably from 30 mA (i.e., 3 memu/cm²) to 1,200 mA (i.e., 120 memu/cm²).

### <Base Material>

The magnetic sheet in the present specification has a base material.

In general, the form of a base material is a film or a sheet.

The raw material of a base material is a resin such as a polyester [such as a polyethylene terephthalate (PET), a polyethylene naphthalate, or a polybutylene terephthalate], a polyethylene [such as a linear low density polyethylene (LLDPE), a low density polyethylene (LDPE), or a high density polyethylene (HDPE)], a polypropylene (PP), a triacetylcellulose, a polystyrene, a polycarbonate, a polyimide, a polyamide, a polyamideimide, a polysulfone, a polyvinyl chloride (PVC), a polyvinylidene chloride (PVDC), a polyacrylonitrile (PAN), a polyphenylene sulfide, a polyether imide, or a polyether sulfone.

Among these, the raw material of a base material is preferably at least one selected from the group consisting of a polyester (such as a polyethylene terephthalate) and a polyethylene, from the viewpoint of mechanical strength, availability, handleability, and versatility.

As a base material, for example, a film or sheet formed using at least one of the raw materials by a known film forming method (such as a T-die method or an inflation method) may be used, or a commercially available product on the market may be used.

The base material may also be a uniaxially-oriented film or biaxially-oriented film, obtained by stretching a film which is formed using at least one of the above-mentioned raw materials.

The base material may also be a film having a laminate structure of two or more layers.

From the viewpoint of improving the adhesion of the base material with an adjacent layer, e.g., a magnetic layer described below, a surface of the base material on which the magnetic layer is to be formed may be subjected to a surface treatment in advance.

Examples of the surface treatment include known surface treatments such as a corona discharge treatment, a plasma treatment, an ozone treatment, an easy adhesive treatment such as a thermal treatment, or a dust-removing treatment.

### - Physical Properties of Base Material -

A base material has a breaking strength of preferably 20 MPa or higher, and more preferably 30 MPa or higher.

When the breaking strength of base material is 20 MPa or higher, the base material has satisfactory mechanical strength, and thus the working efficiency of the magnetic sheet is further improved.

The upper limit of the breaking strength of base material is not particularly limited, and is, for example, preferably 700 MPa or less from the viewpoint of cut processing.

The breaking strength of base material is a value measured in accordance with a method described in Japanese Industrial Standards (JIS K 7161 "Plastics - Determination of tensile properties -", or ISO 527-1 (2012) and ISO 527-2 (2012)) in an environment of an atmosphere temperature of 23°C and a relative humidity of 50% in a condition in which the tensile rate is 50 mm/min using a tensile tester.

As a measurement device, for example, a universal material testing machine TENSILON RTF (manufactured by A & D Company, Limited) may be suitably used. However, the measurement device is not limited thereto.

The breaking strength of a base material is preferably from 20 MPa to 700 MPa, and more preferably from 30 MPa to 700 MPa.

A base material has a breaking elongation of preferably 30% or higher, and more preferably 40% or higher.

When the breaking elongation of base material is 30% or higher, the base material has elongation satisfactory for laying using a machine, and thus the working efficiency of the magnetic sheet is further improved.

The upper limit of the breaking elongation of base material is not particularly limited, and is, for example, preferably 500% or less from the viewpoint of cut processing.

The breaking elongation of base material is a value measured in accordance with a method described in Japanese Industrial Standards JIS K 6251 (2010) or in ISO 37 (2005) in an environment of an atmosphere temperature of 23°C and a relative humidity of 50% in a condition in which the tensile rate is 50 mm/min using a tensile tester.

As a measurement device, for example, a universal material testing machine TENSILON RTF (manufactured by A & D Company, Limited) may be suitably used. However, the measurement device is not limited thereto.

The breaking elongation of a base material is preferably from 30% to 500%, and more preferably from 40% to 500%.

A base material still more preferably has a breaking strength of 20 MPa or higher and a breaking elongation of 30% or higher, and particularly preferably has a breaking strength of 30 MPa or higher and a breaking elongation of 40% or higher, from the viewpoint of obtaining a magnetic sheet having more excellent working efficiency.

### - Thickness of Base Material -

The thickness of base material is not particularly limited, and is, for example, preferably from 5 µm to 100 µm, and more preferably from 10 µm to 60 µm, from the viewpoint of strength, working efficiency, and air permeability.

### <Magnetic Layer>

The magnetic sheet in the present specification has a magnetic layer which contains a resin and at least one selected from the group consisting of a ferromagnetic powder and a ferrimagnetic powder, and in which the product (Mrt) of residual magnetization (Mr) and layer thickness (t) is 20 mA (2 memu/cm²) or higher.

In a magnetic sheet, a magnetic layer is arranged on a base material described above.

In a magnetic sheet, it is preferable that the magnetic layer is the outermost layer from the viewpoint of efficiently promoting the growth of plants.

### (Ferromagnetic and/or Ferrimagnetic Powder)

A magnetic layer contains at least one selected from the group consisting of a ferromagnetic powder and a ferrimagnetic powder.

The ferromagnetic powder is not particularly limited, and examples thereof include powders of metals showing ferromagnetism (which may also be referred to as "ferromagnetic metal(s)") such as iron (Fe), an alloy. The ferrimagnetic powder is not particularly limited, and examples thereof include powders of metal oxides showing ferrimagnetism or compounds (such as magnetite or hexagonal ferrite) containing these metals, and the like.

Among these, the ferromagnetic and/or ferrimagnetic powder is preferably at least one selected from the group consisting of Fe, an alloy containing Fe as a main component, and a compound containing Fe as a main component. Here, the "main component" means that the component is contained at a constitutional proportion of 50% by mass or higher in an alloy or compound.

The ferromagnetic and/or ferrimagnetic powder may further contain at least one element selected from the group consisting of Al, Si, S, Sc, Ti, V, Cu, Y, Mo, Rh, Pd, Ag, Sn, Sb, Te, Ba, Ta, W, Re, Au, Bi, La, Ce, Pr, Nd, P, Zn, Sr and B in addition to a ferromagnetic metal such as Fe or a ferrimagnetic oxide such as hexagonal ferrite, from the viewpoint of, for example, an improvement or adjustment of magnetization and coercive force, and an improvement of durability.

It is also preferable that the ferromagnetic powder has an oxide film on a surface thereof, from the viewpoint of preventing oxidation demagnetization.

The particle form of ferromagnetic and/or ferrimagnetic powder is not particularly limited, and examples thereof include a needle-like form, a spindle-like form, a spherical form, a plate form, and a cubic form. Among these, the particle form of ferromagnetic and/or ferrimagnetic powder is preferably in the needle-like form from the viewpoint of securing coercive force.

The size of ferromagnetic and/or ferrimagnetic powder is not particularly limited.

For example, in a case in which the particle form of ferromagnetic and/or ferrimagnetic powder is in a needle-like form, the average of the ratios of the long axis lengths to the short axis lengths (i.e., long axis length/short axis length) of the ferromagnetic and/or ferrimagnetic powder is preferably from 2 to 20.

The "long axis" herein means the longest axis among three axes (i.e., x axis, y axis, and z axis) in the three-dimensional space of a powder particle, and the "short axis" means the shortest axis among these.

The average is a value obtained by measuring 500 particles and obtaining their average.

The average long axis length of ferromagnetic and/or ferrimagnetic powder particles is 0.01 µm or more, and more preferably 0.02 µm or more.

When the average long axis length of ferromagnetic and/or ferrimagnetic powder particles is 0.01 µm or more, the saturated magnetization (δs) per unit mass becomes sufficiently high, and ferromagnetic and/or ferrimagnetic powder particles are also sufficiently oriented to increase residual flux density (Br), and thus a desired amount of magnetization, i.e., a sufficient amount of magnetization for the growth of plants may be obtained with a smaller amount of particles.

The upper limit of the average long axis length of ferromagnetic and/or ferrimagnetic powder particles is 1.0 µm or less.

The lengths of the short axis and long axis of ferromagnetic and/or ferrimagnetic powder particles are values measured by the following method. Ferromagnetic and/or ferrimagnetic powder particles are observed using a transmission electron microscope (TEM), and the obtained images are incorporated into an image processing program Image J and subjected to image processing. The images of 500 particles optionally extracted from some visual fields of TEM images are analyzed, and diameters each corresponding to a circle are calculated. Statistical processing is carried out based on the population.

The coercive force (Hc) of ferromagnetic powder is preferably from 24 kA/m to 239 kA/m (i.e., from about 300 Oe to about 3000 Oe; wherein 1 Oe = 1/4 πkA/m, the same applies hereinafter), and more preferably from 48 kA/m to 199 kA/m (i.e., from about 600 Oe to about 2500 Oe).

The coercive force (He) of ferromagnetic powder is a value measured in an environment of an atmosphere temperature of 25°C in a condition in which the applied magnetic field is 796 kA/m (i.e., 10 kOe) using a vibrating sample magnetometer.

As a measurement device, for example, VSM-P7 (manufactured by Toei Industry Co., Ltd.) may be suitably used. However, the measurement device is not limited thereto.

The saturated magnetization (δs) of ferromagnetic and/or ferrimagnetic powder per unit mass is preferably 40 Am²/kg (i.e., 40 emu/g) or more, and more preferably 80 Am²/kg (i.e., 80 emu/g) or more.

When the saturated magnetization (δs) of ferromagnetic and/or ferrimagnetic powder is 40 Am2/kg (i.e., 40 emu/g) or more, a desired amount of magnetization, i.e., a sufficient amount of magnetization for the growth of plants may be obtained with a smaller amount of ferromagnetic and/or ferrimagnetic powder.

The upper limit of the saturated magnetization (δs) of ferromagnetic and/or ferrimagnetic powder is not particularly limited, and is, for example, preferably 180 Am2/kg (i.e., 180 emu/g) or less.

The saturated magnetization (δs) of ferromagnetic and/or ferrimagnetic powder is a value measured in an environment of an atmosphere temperature of 25°C in a condition in which the applied magnetic field is 796 kA/m (10 kOe) using a vibrating sample magnetometer.

As a measurement device, for example, VSM-P7 (manufactured by Toei Industry Co., Ltd.) may be suitably used. However, the measurement device is not limited thereto.

As the ferromagnetic and/or ferrimagnetic powder, a commercially available product on the market may be used. As the ferromagnetic and/or ferrimagnetic powder, a ferromagnetic and/or ferrimagnetic powder which is obtained by a known production method may also be used.

Examples of a method for producing a ferromagnetic powder include: (1) a method in which a ferromagnetic metal is reduced with a composite organic acid (mainly oxalate) and a reducing gas such as hydrogen; (2) a method in which iron oxide is reduced with a reducing gas such as hydrogen; (3) a method in which a metal carbonyl compound is thermally decomposed; (4) a method in which a reducing agent such as sodium boron hydride, hypophosphite or hydrazine is added to an aqueous solution of a ferromagnetic metal to reduce the ferromagnetic metal; and (5) a method in which a ferromagnetic metal is evaporated in an inert gas at a low pressure to obtain fine powder.

The ferromagnetic powder thus obtained may be used after being subjected to a known gradual oxidation treatment such as: (1) a method in which the ferromagnetic powder is immersed in an organic solvent, followed by drying; (2) a method in which the ferromagnetic powder is immersed in an organic solvent, and an oxide film is then formed on a surface thereof by supplying an oxygen-containing gas, followed by drying; or (3) a method in which an oxide coating film is formed on a surface of the ferromagnetic powder by adjusting the partial pressures of oxygen gas and an inert gas, without using an organic solvent.

The amount of ferromagnetic and/or ferrimagnetic powder contained in a magnetic layer is not particularly limited, and is, for example, preferably 30% by mass or more and more preferably 50% by mass or more, with respect to the total amount of the solid content(s) contained in the magnetic layer from the viewpoint of increasing the magnetization of a magnetic layer and further promoting the growth of plants.

The upper limit of the amount of ferromagnetic and/or ferrimagnetic powder contained in a magnetic layer is not particularly limited, and is, for example, preferably 90% by mass or less from the viewpoint of the film strength of a magnetic layer.

The amount of ferromagnetic and/or ferrimagnetic powder contained in a magnetic layer is preferably from 30% by mass to 90% by mass, and more preferably from 50% by mass to 90% by mass, with respect to the total amount of the solid content(s) contained in the magnetic layer.

### (Resin)

A magnetic layer contains at least one resin.

The resin is not particularly limited. For example, any of conventionally known thermoplastic resins, thermosetting resins, electron beam curable resins, and mixtures thereof may be used.

Examples of thermoplastic resins include: a polymer or copolymer containing, as a structural unit, vinyl chloride, vinyl acetate, vinyl alcohol, maleic acid, acrylic acid, an acrylic acid ester, vinylidene chloride, acrylonitrile, methacrylic acid, a methacrylic acid ester, styrene, butadiene, ethylene, vinyl butyral, vinyl acetal, vinyl ether, or the like; a urethane resin; and various types of rubber resins.

It is preferable that a thermoplastic resin has a glass transition temperature (Tg) of from -100°C to 150°C, a number average molecular weight (Mn) of from 1,000 to 200,000 (more preferably from 10,000 to 100,000), and a polymerization degree of from 50 to 1,000.

The glass transition temperature (Tg) of thermoplastic resin is a value measured using a differential scanning calorimeter (DSC).

The number average molecular weight of thermoplastic resin is a value measured by gel permeation chromatography (GPC) using a polystyrene as a standard. The measurement method by gel permeation chromatography (GPC) is the same as a method of measuring the weight average molecular weight of resin described below, and thus its explanation is omitted herein.

Examples of thermosetting resins include a phenol resin, an epoxy resin, a urethane curable resin, a urea resin, a melamine resin, an alkyd resin, a silicone resin, and an epoxy/polyamide resin.

The details of the resins are described in "Plastics Handbook" published by Asakura Publishing Co., Ltd. Examples of these resins and their production methods are described in detail in Japanese Patent Application Laid-Open (JP-A) No. S62-256219.

As a resin, a commercially available product on the market may be used.

In a case in which the magnetic sheet in the specification is used in an environment of contact with water, a resin contained in a magnetic layer is a water-insoluble resin. When the resin is a water-insoluble resin, it is capable of preventing the pollution of soil or water by a ferromagnetic and/or ferrimagnetic powder contained in a magnetic layer.

Herein, the "water-insoluble resin" means a resin of which dissolution amount with respect to 100 g of distilled water is 1 g or less, when the resin is dried at 105°C for 2 hours and then immersed in distilled water at 25°C.

From such a viewpoint, the resin is preferably at least one selected from the group consisting of a vinyl chloride resin, a urethane resin, a polystyrene, a polyethylene, and a nitrocellulose. The resin is more preferably a urethane resin from the viewpoint of obtaining a magnetic sheet having elasticity and superior working efficiency.

Examples of the urethane resin usable herein include urethane resins having a structure of a polyester polyurethane, a polyether polyurethane, a polyether polyester polyurethane, a polycarbonate polyurethane, a polyester polycarbonate polyurethane, a polycaprolactone polyurethane polyolefin polyurethane, or the like.

If necessary, the resin is preferably a resin in which at least one polar group selected from the group consisting of -COOM, -SO₃M, -OSO₃M, -P=O(OM)₂, -O-P=O(OM)₂ (wherein M represents a hydrogen atom or an alkali metal atom), -OH, -NR₂, -N⁺R₃ (hereinbefore, R represents a hydrocarbon group), an epoxy group, -SH and -CN is introduced thereto by a copolymerization or addition reaction, from the viewpoint of dispersibility of ferromagnetic and/or ferrimagnetic powder particles. The amount of such polar group is preferably from 10⁻⁸ mol/g to 10⁻¹ mol/g, and more preferably from 10⁻⁶ mol/g to 10⁻² mol/g.

The weight average molecular weight of resin is preferably from 10,000 to 200,000, and more preferably from 30,000 to 150,000, from the viewpoint of durability of a coating film and dispersibility of ferromagnetic and/or ferrimagnetic powder particles.

The weight average molecular weight of resin is a value measured by gel permeation chromatography (GPC) using a polystyrene as a standard.

In the measurement by gel permeation chromatography (GPC), HLC (registered trademark)-8020GPC (Tosoh Corporation) is used as a measurement device, three of TSKgel (registered trademark) Super Multipore HZ-H (4.6 mmID × 15 cm, Tosoh Corporation) are used as columns, and THF (tetrahydrofuran) is used as an eluent. The measurement is carried out using an RI detector under the conditions in which the sample concentration is 0.45% by mass, the flow rate is 0.35 ml/min, the sample injection amount is 10 µl, and the measurement temperature is 40°C.

A standard curve is created from 8 samples of "TSK Standard Polystyrene": "F-40," "F-20", "F-4", "F-1", "A-5000", "A-2500", "A-1000", and "n-propylbenzene" of Tosoh Corporation.

The amount of resin contained in a magnetic layer is not particularly limited, and is preferably from 5% by mass to 50% by mass, and more preferably from 10% by mass to 30% by mass, with respect to the amount of ferromagnetic and/or ferrimagnetic powder contained in a magnetic layer, from the viewpoint of film strength.

### (Other Components)

The magnetic layer may contain other components such as carbon black, a lubricant agent, or an abrasive in addition to the ferromagnetic and/or ferrimagnetic powder and resin described above, if necessary, as long as the effect is not impaired.

### - Physical Properties of Magnetic Layer -

The squareness ratio (SQ) of a magnetic layer is not particularly limited, and is, for example, preferably 0.6 or higher and more preferably 0.7 or higher, from the viewpoint of further improving the growth of plants.

The squareness ratio (SQ) of a magnetic layer is a value measured in an environment of an atmosphere temperature of 25°C in a condition in which the applied magnetic field is 796 kA/m (i.e., 10 kOe) using a vibrating sample magnetometer.

As a measurement device, for example, VSM-P7 (manufactured by Toei Industry Co., Ltd.) may be suitably used. However, the measurement device is not limited thereto.

The coercive force (He) of a magnetic layer is preferably from 24 kA/m to 239 kA/m (i.e., from about 300 Oe to about 3,000 Oe; 1 Oe = 1/4 πkA/m, the same applies hereinafter), and more preferably from 48 kA/m to 199 kA/m (i.e., from about 600 Oe to about 2,500 Oe).

The coercive force (He) of a magnetic layer is a value measured in an environment of an atmosphere temperature of 25°C in a condition in which the applied magnetic field is 796 kA/m (i.e., 10 kOe) using a vibrating sample magnetometer.

As a measurement device, for example, VSM-P7 (manufactured by Toei Industry Co., Ltd.) may be suitably used. However, the measurement device is not limited thereto.

The magnetization amount of magnetic layer is not particularly limited, and is, for example, preferably 50 mT (i.e., 500 G; wherein 1 mT = 10 G, the same applies hereinafter) or more, and more preferably 100 mT (i.e., 1,000 G) or more, from the viewpoint of further promoting the growth of plants.

The upper limit of the magnetization amount of magnetic layer is not particularly limited, and is, for example, preferably 400 mT (i.e., 4,000 G) or less.

### - Thickness of Magnetic Layer -

The thickness of a magnetic layer is not particularly limited, and is, for example, preferably from 0.2 µm to 10 µm, and more preferably from 0.5 µm to 5 µm.

When the thickness of a magnetic layer is 0.2 µm or more, the magnetic layer is capable of containing a larger amount of ferromagnetic and/or ferrimagnetic powder, and sufficient magnetic force is obtained, leading to sufficient achievement of the effect of promoting the growth of plants.

When the thickness of a magnetic layer is 10 µm or less, the adhesion between the magnetic layer and a base material is sufficiently obtained, and a problem in that the magnetic layer is peeled off during laying of the magnetic sheet does not easily occur.

### <Other Layers>

The magnetic sheet in the present specification may further have an additional layer(s) other than the base material and the magnetic layer described above, if necessary, as long as the effect is not impaired.

For example, the magnetic sheet in the present specification may have an undercoat layer between the base material and the magnetic layer. When the magnetic sheet has an undercoat layer between a base material and a magnetic layer, the adhesion between the base material and the magnetic layer tends to be improved.

Examples of raw materials for forming an undercoat layer include a polyester resin.

The thickness of an undercoat layer is not particularly limited, and is, for example, preferably from 0.01 µm to 0.3 µm, and more preferably from 0.05 µm to 0.2 µm.

### [Physical Properties of Magnetic Sheet]

The breaking strength of a magnetic sheet is preferably 20 MPa or higher and more preferably 30 MPa or higher.

When the breaking strength of a magnetic sheet is 20 MPa or higher, the magnetic sheet has sufficient mechanical strength, and thus working efficiency thereof is further improved.

The upper limit of the breaking strength of a magnetic sheet is not particularly limited, and is, for example, preferably 700 MPa or less from the viewpoint of cut processing.

The method of measuring the breaking strength of a magnetic sheet is the same as the method of measuring the breaking strength of base material described above, and thus its explanation is omitted herein.

The breaking strength of a magnetic sheet is preferably from 20 MPa to 70MPa, and more preferably from 30 MPa to 70 MPa.

The breaking elongation of a magnetic sheet is preferably 30% or higher, and more preferably 40% or higher.

When the breaking elongation of a magnetic sheet is 30% or higher, the magnetic sheet has sufficient elongation for laying using a machine, and thus working efficiency thereof is further improved.

The upper limit of the breaking elongation of a magnetic sheet is not particularly limited, and is, for example, preferably 500% or less from the viewpoint of cut processing.

The method of measuring the breaking elongation of a magnetic sheet is the same as the method of measuring the breaking elongation of base material described above, and thus its explanation is omitted herein.

A magnetic sheet has preferably a breaking strength of 20 MPa or higher and a breaking elongation of 30% or higher, and more preferably a breaking strength or 30 MPa or higher and a breaking elongation of 40% or higher, from the viewpoint of working efficiency.

A magnetic sheet has a transmittance of light having a wavelength of 600 nm of preferably 3% or lower, and more preferably 1.5% or lower.

When the transmittance of light having a wavelength of 600 nm of a magnetic sheet is 3% or lower, it is capable of efficiently preventing the growth of weeds by covering the soil with the magnetic sheet during the cultivation of plants.

The light transmittance of a magnetic sheet is a value measured in an environment of an atmosphere temperature of 23°C and a relative humidity of 50% using a spectrophotometer.

### [Thickness of Magnetic Sheet]

The thickness of a magnetic sheet is not particularly limited, and is, for example, preferably from 8 µm to 100 µm, and more preferably from 10 µm to 60 µm.

When the thickness of a magnetic sheet is 8 µm or more, the magnetic sheet is capable of having sufficient strength, and thus working efficiency thereof is further improved.

When the thickness of a magnetic sheet is 100 µm or less, it is possible to suppress a decrease in working efficiency caused by the weight of the magnetic sheet itself. In addition, air permeation necessary for the growth of plants does not tend to be inhibited.

### [Other matters]

A magnetic sheet may have at least one hole for the purpose of sowing seeds or planting a seedling.

The size of a hole is not particularly limited, and may appropriately be set depending on, for example, the size of seeds or of a seedling of a plant. The size of a hole is preferably such that a certain amount of water necessary for the growth of plants can be spread into the seeds or roots of a plant, from the viewpoint of promoting the growth of plants.

### [Method of Producing Magnetic Sheet]

The magnetic sheet in the present specification may be produced by forming a magnetic layer containing a ferromagnetic and/or ferrimagnetic powder and a resin on a base material.

The method of forming a magnetic layer on a base material is, for example, preferably a coating method in which a coating liquid obtained by dispersing a ferromagnetic and/or ferrimagnetic powder and a resin in a suitable solvent is applied on a base material and dried, from the viewpoint of costs, mass productivity, and ease of equipment. In a conventional magnetic sheet formed by kneading a ferromagnetic and/or ferrimagnetic powder into a resin, ferromagnetic and/or ferrimagnetic powder particles are randomly arranged. In contrast, in a case in which a magnetic layer is formed by coating, it is possible to arranging ferromagnetic and/or ferrimagnetic powder particles in a particular direction, and it is thus possible to obtain a magnetic sheet having higher magnetization.

An example of the method of producing a magnetic sheet will be described. A magnetic sheet may be produced, for example, by the following method. However, the method of producing a magnetic sheet is not limited thereto.

According to an embodiment, the method of producing a magnetic sheet (hereinafter, referred to as "production method") includes: a first step of forming a coating film by applying a coating liquid for forming a magnetic layer containing a ferromagnetic and/or ferrimagnetic powder and a resin on a base material; a second step of subjecting the thus-formed coating film to a magnetic field orientation treatment; and a third step of drying the coating film after the magnetic field orientation treatment.

Each step in the production method will now be described in detail.

Specific examples of components used in the steps and preferable aspects are as described in the magnetic sheet section described above, and thus the explanations are omitted herein.

### <First Step>

The first step is a step of forming a coating film by applying a coating liquid for forming a magnetic layer on a base material, the coating liquid containing a ferromagnetic and/or ferrimagnetic powder and a resin.

The coating liquid for forming a magnetic layer may further contain other component(s) such as an organic solvent or a lubricant agent, other than the ferromagnetic and/or ferrimagnetic powder and the resin, if necessary.

The organic solvent is not particularly limited, and examples thereof include ketones such as acetone, methyl ethyl ketone, methyl isobutyl ketone, diisobutyl ketone, cyclohexanone, isophorone, or tetrahydrofuran; alcohols such as methanol, ethanol, propanol, butanol, isobutyl alcohol, isopropyl alcohol, or methyl cyclohexanol; esters such as methyl acetate, butyl acetate, isobutyl acetate, isopropyl acetate, ethyl lactate, or glycol acetate; glycol ethers such as glycol dimethyl ether, glycol monoethyl ether, or dioxane; aromatic hydrocarbons such as benzene, toluene, xylene, cresol, or chlorobenzene; chlorinated hydrocarbons such as methylene chloride, ethylene chloride, carbon tetrachloride, chloroform, ethylene chlorohydrin, or dichlorobenzene; N,N-dimethylformamide; and hexane.

The coating liquid for forming a magnetic layer may be prepared, for example, by mixing or kneading a ferromagnetic and/or ferrimagnetic powder and a resin, and, if necessary, other component(s) such as an organic solvent, followed by applying a dispersion treatment to the thus-obtained mixture or kneaded product.

The amounts of ferromagnetic and/or ferrimagnetic powder and resin contained in a coating liquid for forming a magnetic layer only have to be each adjusted so that the amounts of ferromagnetic and/or ferrimagnetic powder and resin contained in a magnetic layer finally formed will be the amounts described in the magnetic sheet section described above, respectively.

The amount of organic solvent contained in a coating liquid for forming a magnetic layer is not particularly limited, and is, for example, appropriately selected depending on the types and amount(s) of component(s) blended in a coating liquid for forming a magnetic layer.

Each component to be mixed or kneaded only has to be mixed or kneaded. All components may be mixed or kneaded at once, or the components may be separated into some groups, which are then mixed or kneaded.

The mixing method is not particularly limited, and examples thereof include mixing by stirring.

The kneading method is not particularly limited, and example thereof include kneading using a continuous kneader, a pressure kneader, or the like. For the details of kneading, refer to the specification of Japanese Patent Application Laid-Open (JP-A) Nos. H01-106338 and S64-79274.

The mixture or kneaded product is subjected to a dispersion treatment. By subjecting the mixture or kneaded product to a dispersion treatment, a ferromagnetic and/or ferrimagnetic powder tends to be uniformly dispersed in a resin, and uneven distribution of the ferromagnetic and/or ferrimagnetic powder in a magnetic layer tends to be inhibited.

The method of dispersion treatment is not particularly limited, and examples thereof include a dispersion treatment using a disperser.

Example of a disperser include various types of known dispersers such as a high-speed rotation disperser, a medium stirring disperser (e.g., a bead mill, a ball mill, a sand mill), an ultrasonic disperser, a colloid mill disperser, or a high pressure disperser.

Among these, the method of dispersion treatment is preferably performed using a bead mill from the viewpoint of dispersion efficiency.

The method of applying a coating liquid for forming a magnetic layer is not particularly limited, and a known coating method such as a doctor method, a coil bar method, a knife coating method, a roll coating method, a spray coating method, a gravure coating method, a bar coating method, or a curtain coating method may be used.

### <Second Step>

The second step is a step of subjecting the thus-formed coating film to a magnetic field orientation treatment.

The method of magnetic field orientation treatment is not particularly limited, and examples thereof include a known method using, for example, a magnetized coil (e.g., a solenoid) or a permanent magnet (e.g., a cobalt magnet).

In the magnetic field orientation treatment, for example, it is preferable that a permanent magnet and a solenoid are used in combination with the same pole facing each other from the viewpoint of an improvement in orientation.

### <Third Step>

The third step is a step of drying a coating film after the magnetic field orientation treatment.

The coating film after the orientation treatment is dried until it shows a decreasing rate of drying.

As a drying means, a known drying means may be used, and examples thereof include natural drying, drying by heating, hot-air drying, and vacuum drying.

The drying temperature and drying time of a coating film are not particularly limited, and may be set appropriately depending on purposes.

### <Other Steps>

According to an embodiment, the production method may further include other step(s) other than the first step, the second step and the third step, if necessary.

Examples of other steps include a step of forming an undercoat layer on a base material, a step of subjecting a magnetic layer to a calendar treatment, and a step of subjecting a magnetic layer after the calendar treatment to a thermal treatment.

The step of forming an undercoat layer on a base material is carried out before the first step.

By forming an undercoat layer between a base material and a magnetic layer, the adhesion between the base material and the magnetic layer is improved, and it is possible to obtain a magnetic sheet having high mechanical strength and superior working efficiency.

The undercoat layer may be formed by applying a coating liquid for forming an undercoat layer containing a raw material for forming an undercoat layer such as a polyester resin on a base material, followed by drying.

By applying a calendar treatment to a magnetic layer, the surface smoothness of the magnetic layer is improved, and vacancies generated by removing an organic solvent during drying tend to be eliminated, and the filling rate of ferromagnetic and/or ferrimagnetic powder in the magnetic layer is improved.

Examples of the means of calendar treatment include various types of metallic rolls, as well as plastics rolls each formed from a resin material having heating resistance such as an epoxy resin, a polyimide, a polyamide or a polyimideamide.

### [Method of Plant Cultivation]

The method of plant cultivation in the present specification is a method of cultivating plants using the magnetic sheet for plant cultivation in the present specification. As long as the growth of plants is promoted, aspects of the use of the magnetic sheet are not particularly limited. The magnetic sheet may be used for both soil cultivation and hydroponics.

The plants to which the method of cultivation in the present specification is applicable are not particularly limited, and may be plants which are capable of being cultivated by sowing seeds or planting a seedling in soil or a hydroponic solution.

Examples of plants include the *Brassicaeae* plants such as Japanese radish, white radish sprouts, Chinese cabbage, pak choy, cabbage, or broccoli; the *Asteracea* plants such as lettuce, mugwort, burdock, or garland chrysanthemum; the *Convolvulacea* plants such as sweet potato, morning glory, bindweed, or water spinach; the *Apiaecae* plants such as celery or parsley; the *Poaceae* plants such as rice, wheat, or corn; the *Rosacea* plants such as strawberry; the *Cucurbitaceae* plants such as cucumber, pumpkin, melon, or watermelon; the *Solanaceae* plants such as tomato, eggplant, green pepper, or potato; the *Liliaceae* plants such as onion or asparagus; and the *Fabaceae* plants.

Preferred examples of the method of plant cultivation using a magnetic sheet will now be described. However, the method of plant cultivation is not limited to these methods.

According to an aspect, the method of plant cultivation in the present specification is a method of plant cultivation (hereinafter, appropriately referred to as "first method") including the steps of: covering soil using the magnetic sheet for plant cultivation described above (hereinafter, appropriately referred to as "covering step"); and sowing a seed or planting a seedling in at least one hole provided in the magnetic sheet which is covering the soil (hereinafter, appropriately referred to as "sowing or planting step").

The first method is a preferable aspect in a case in which the magnetic sheet is used for soil cultivation of plants.

In the first method, the growth of plants is promoted, for example the germination rate of seeds sowed in the soil is improved or the elongation rate of plant length of seedlings planted in the soil is improved, and thus productivity of plants is favorable.

### <Covering Step>

The covering step in the first method is a step of covering soil with a magnetic sheet.

Since the magnetic sheet in the present specification has high mechanical strength, and a machine can be used for covering the soil, working efficiency is favorable.

Although it depends on the type of ferromagnetic and/or ferrimagnetic powder contained in a magnetic sheet, it is capable of suppressing the growth of weeds which are likely to inhibit the growth of plants of purpose by covering the soil with the magnetic sheet.

### <Sowing or Planting Step>

The sowing or planting step in the first method is a step of sowing a seed or planting a seedling in at least one hole provided in a magnetic sheet which is covering the soil.

The hole in a magnetic sheet may be provided in advance before the covering step, or may be provided after the covering step. It is preferable that the hole is provided in advance before the covering step from the viewpoint of operating efficiency.

The method of sowing a seed or planting a seedling is not particularly limited, and may appropriately be selected depending on the type of plant.

According to another aspect, the method of plant cultivation in the present specification is a method of plant cultivation (hereinafter, appropriately referred to as "second method") including the steps of: laying the magnetic sheet for plant cultivation described above on the bottom of a hydroponic bed (hereinafter, appropriately referred to as "laying step"); and sowing a seed or planting a seedling in the hydroponic bed on which the magnetic sheet has been laid (hereinafter, appropriately referred to as "sowing or planting step").

The second method is a preferable aspect in a case in which a magnetic sheet is used for the hydroponics of plants.

In the second method, the growth of plants is promoted, for example the germination rate of seeds sowed in the hydroponic bed is improved and the elongation rate of plant length of seedlings planted in the hydroponic bed is improved, and thus productivity of plants is favorable.

### <Laying Step>

The laying step in the second method is a step of laying a magnetic sheet on the bottom of a hydroponic bed.

"Laying a magnetic sheet on the bottom of a hydroponic bed" herein means to lay a magnetic sheet on a part or the whole of the bottom of a hydroponic bed. It is particularly preferable that the sheet is laid on the whole of the bottom of a hydroponic bed.

Since the magnetic sheet in the present specification has high mechanical strength, and a machine can be used for laying the magnetic sheet on the bottom of a hydroponic bed, working efficiency is favorable.

### <Sowing or Planting Step>

The sowing or planting step in the second method is a step of sowing a seed or planting a seedling in a hydroponic bed on which a magnetic sheet has been laid.

The method of sowing a seed or planting a seedling is not particularly limited, and may appropriately be selected depending on the type of plant.

According to another aspect, the method of plant cultivation in the present specification (hereinafter, appropriately referred to as "third method") is a method of plant cultivation including the steps of: covering a surface of a hydroponic solution which has been supplied to a hydroponic bed with the magnetic sheet for plant cultivation described above (hereinafter, appropriately referred to as "covering step"); and sowing a seed or planting a seedling in a hole provided in the magnetic sheet which is covering the surface of the hydroponic solution (hereinafter, appropriately referred to as "sowing or planting step").

The third method is another preferable aspect in a case in which a magnetic sheet is used for the hydroponics of plants.

In the third method, as is the case of the second method, the growth of plants is promoted, for example the germination rate of seeds sowed in a hydroponic bed is improved and the elongation rate of plant length of seedlings planted in a hydroponic bed is improved, and thus productivity of plants is favorable.

### <Covering Step>

The covering step in the third method is a step of covering a surface of a hydroponic solution which has been supplied to a hydroponic bed with a magnetic sheet.

The "covering the surface of a hydroponic solution which has been supplied to a hydroponic bed" herein means to cover a part or the whole of the surface of a hydroponic solution which has been supplied to a hydroponic bed. It is particularly preferable that the magnetic sheet covers the whole of the surface of a hydroponic solution.

Since the magnetic sheet in the present specification has high mechanical strength, and a machine can be used for covering the surface of a hydroponic solution which has been supplied to a hydroponic bed, working efficiency is favorable.

### <Sowing or Planting Step>

The sowing or planting step in the third method is a step of sowing a seed or planting a seedling in a hole provided in a magnetic sheet which is covering the surface of a hydroponic solution.

The hole in a magnetic sheet may be provided in advance before the covering step, or may be provided after the covering step. It is preferable that the hole is provided in advance before the covering step from the viewpoint of operating efficiency.

The method of sowing a seed or planting a seedling is not particularly limited, and may appropriately be selected depending on the type of plant.

### EXAMPLES

The invention will now be described in more detail by way of examples. It should be noted that the invention is not limited to the following examples as long as the gist thereof is not impaired.

In the Examples section, the breaking strength, breaking elongation, and light transmittance at a wavelength of 600 nm of a magnetic sheet were measured by the methods described above.

In the Examples section, the coercive force (Hc), squareness ratio (SQ), residual magnetization (Mr), magnetization amount of magnetic layer in a magnetic sheet, and the physical properties [e.g., glass transition temperature and weight average molecular weight] of resin contained in the magnetic layer were also measured by the methods described above.

### [Production of Magnetic Sheet]

### <Example 1>

First, 100 parts by mass of a ferromagnetic powder [magnetic iron powder; needle-like form; average long axis length: 0.25 µm, saturated magnetization (δs): 0.13 A·m²/g (i.e., 130 emu/g), coercive force (Hc): 135.3 kA/m (i.e., 1,700 Oe)] and 20 parts by mass of a resin in terms of solid content [urethane resin, trade name: VYLON (registered trademark) UR8300; glass transition temperature: 32°C, weight average molecular weight: 50,000, manufactured by Toyobo Co., Ltd.] were mixed, and methyl ethyl ketone (MEK) was added to the obtained mixture to adjust the solid concentration to 35% by mass. The obtained mixed liquid was subjected to a dispersion treatment using a bead mill for 3 hours, followed by filtering, thereby obtaining a coating liquid for forming a magnetic layer.

Next, 20 parts by mass of a resin [polyester, trade name: VYLON (registered trademark) 800; weight average molecular weight: 10,000, manufactured by Toyobo Co., Ltd.] and 100 parts by mass of methyl ethyl ketone (MEK) were mixed, thereby obtaining a coating liquid for forming an undercoat layer.

On a base material [polyethylene terephthalate (PET); thickness: 14 µm, breaking strength: 260 MPa, breaking elongation: 60%], the coating liquid for forming an undercoat layer was applied by a coil bar method so that the thickness after drying was 0.1 µm, and the thus-obtained coating film was dried, thereby forming an undercoat layer.

Next, on the surface of the undercoat layer formed on the base material, the coating liquid for forming a magnetic layer was applied by a doctor method so that the thickness after drying was 3 µm.

The thus-obtained coating film was allowed to pass between permanent magnets with the same pole facing each other during a wet condition, and then pass between solenoids, which produce magnetic flux in the same direction as the coating direction, with the same pole facing each other, whereby the ferromagnetic powder particles contained in the coating film were oriented in the coating direction, followed by drying, thereby obtaining a magnetic sheet of Example 1.

The breaking strength of the thus-obtained magnetic sheet of Example 1 was 290 MPa, the breaking elongation was 60%, and the light transmittance at a wavelength of 600 nm was 0.12%.

The product (Mrt) of residual magnetization (Mr) and layer thickness (t) of the magnetic layer in the magnetic sheet of Example 1 was 540 mA (i.e., 54 memu/cm²), the coercive force (Hc) was 137.2 kA/m (i.e., about 1,720 Oe), the squareness ratio (SQ) was 0.825, and the magnetization amount was 230 mT (i.e., 2300 G).

### <Example 2>

First, 100 parts by mass of a ferromagnetic powder [magnetic iron powder; needle-like form; average long axis length: 0.12 µm, saturated magnetization (δs): 0.125 A·m²/g (i.e., 125 emu/g), coercive force (Hc): 175.5 kA/m (i.e., 2,200 Oe)], and 20 parts by mass of a resin in terms of solid content [urethane resin, trade name: VYLON (registered trademark) UR8300, glass transition temperature: 32°C, weight average molecular weight: 50,000, manufactured by Toyobo Co., Ltd.] were mixed, and methyl ethyl ketone (MEK) was added to the obtained mixture to adjust the solid concentration to 35% by mass. The obtained mixed liquid was subjected to a dispersion treatment using a bead mill for 3 hours, followed by filtering, thereby obtaining a coating liquid for forming a magnetic layer.

Next, 20 parts by mass of a resin [polyester, trade name: VYLON (registered trademark) 800, weight average molecular weight: 10,000, manufactured by Toyobo Co., Ltd.], 100 parts by mass of methyl ethyl ketone (MEK), and 20 parts by mass of carbon black were mixed, and the obtained mixed liquid was subjected to a dispersion treatment using a bead mill for 3 hours, thereby obtaining a coating liquid for forming an undercoat layer.

On a base material [polyethylene terephthalate (PET), thickness: 14 µm, breaking strength: 260 MPa, breaking elongation: 60%], the coating liquid for forming an undercoat layer was applied by a coil bar method so that the thickness after drying was 1 µm, and the thus-obtained coating film was then dried, thereby forming an undercoat layer.

Next, on the surface of the undercoat layer formed on the base material, the coating liquid for forming a magnetic layer was applied by a doctor method so that the thickness after drying was 0.12 µm.

The thus-obtained coating film was allowed to pass between permanent magnets with the same pole facing each other during a wet condition, and then pass between solenoids, which produce magnetic flux in the same direction as the coating direction, with the same pole facing each other, whereby the ferromagnetic powder particles contained in the coating film were oriented in the coating direction, followed by drying, thereby obtaining a magnetic sheet of Example 2.

The breaking strength of the thus-obtained magnetic sheet of Example 2 was 290 MPa, the breaking elongation was 60%, and the light transmittance at a wavelength of 600 nm was 2.4%.

The product (Mrt) of residual magnetization (Mr) and layer thickness (t) of the magnetic layer in the magnetic sheet of Example 2 was 22 mA (i.e., 2.2 memu/cm²), the coercive force (He) was 183.5 kA/m (i.e., about 2,300 Oe), the squareness ratio (SQ) was 0.84, and the magnetization amount was 210 mT (i.e., 2,100 G).

### <Comparative Example 1>

First, 100 parts by mass of a ferrimagnetic powder [barium ferrite (BaFe); plate-like form; average plate diameter: 0.3 µm, saturated magnetization (δs): 0.048 A·m²/g (i.e., 48 emu/g), coercive force (Hc): 167.5 kA/m (i.e., 2,100 Oe)] and 20 parts by mass of a resin in terms of solid content [urethane resin, trade name: VYLON (registered trademark) UR8300, glass transition temperature: 32°C, weight average molecular weight: 50,000, manufactured by Toyobo Co., Ltd.] were mixed, and methyl ethyl ketone (MEK) was added to the thus-obtained mixture to adjust the solid concentration to 35% by mass. The obtained mixed liquid was subjected to a dispersion treatment using a bead mill for 3 hours, followed by filtering, thereby obtaining a coating liquid for forming a magnetic layer.

Next, 20 parts by mass of a resin [polyester, trade name: VYLON (registered trademark) 800, weight average molecular weight: 10,000, manufactured by Toyobo Co., Ltd.], 100 parts by mass of methyl ethyl ketone (MEK), and 20 parts by mass of carbon black were mixed, and the thus-obtained mixed liquid was subjected to a dispersion treatment using a bead mill for 3 hours, thereby obtaining a coating liquid for forming an undercoat layer.

On a base material [polyethylene terephthalate (PET), thickness: 14 µm, breaking strength: 260 MPa, breaking elongation: 60%], the coating liquid for forming an undercoat layer was applied by a coil bar method so that the thickness after drying was 1 µm, and the thus-obtained coating film was then dried, thereby forming an undercoat layer.

Next, on the surface of the undercoat layer formed on the base material, the coating liquid for forming a magnetic layer was applied by a doctor method so that the thickness after drying was 0.1 µm.

The thus-obtained coating film was allowed to pass between permanent magnets with the same pole facing each other during a wet condition, then pass between solenoids, which produce magnetic flux in the same direction as the coating direction, with the same pole facing each other, whereby the ferrimagnetic powder particles contained in the coating film were oriented in the coating direction, followed by drying, thereby obtaining a magnetic sheet of Comparative Example 1.

The breaking strength of the thus-obtained magnetic sheet of Comparative Example 1 was 290 MPa, the breaking elongation was 60%, and the light transmittance at a wavelength of 600 nm was 3.6%.

The product (Mrt) of residual magnetization (Mr) and layer thickness (t) of the magnetic layer in the magnetic sheet of Comparative Example 1 was 2.8 mA (i.e., 0.28 memu/cm²), the coercive force (Hc) was 183.5 kA/m (i.e., about 2,300 Oe), the squareness ratio (SQ) was 0.55, and the magnetization amount was 57 mT (570 G).

### <Comparative Example 2>

On a release paper, the coating liquid for forming a magnetic layer obtained in Example 1 was applied by a doctor method so that the thickness after drying was 18 µm.

The thus-obtained coating film was allowed to pass between permanent magnets with the same pole facing each other during a wet condition, then pass between solenoids, which produce magnetic flux in the same direction as the coating direction, with the same pole facing each other, whereby the ferromagnetic and/or ferrimagnetic powder particles contained in the coating film were oriented in the coating direction. The coating film after the magnetic orientation was dried in an environment of 25°C for 30 minutes, and the release paper was then peeled off, thereby obtaining a magnetic sheet of Comparative Example 2.

The breaking strength of the thus-obtained magnetic sheet of Comparative Example 2 was 150 MPa, the breaking elongation was 0.1%, and the light transmittance at a wavelength of 600 nm was 0.05%.

The product (Mrt) of residual magnetization (Mr) and layer thickness (t) of the magnetic layer in the magnetic sheet of Comparative Example 2 was 3,200 mA (i.e., 320 memu/cm²), the coercive force (He) was 134 kA/m (i.e., about 1,680 Oe), the squareness ratio (SQ) was 0.78, and the magnetization amount was 210 mT (i.e., 2100 G).

### [Plant Cultivation Test]

### [Experiment 1: Cultivation of Japanese radish]

### <Test Example 1-1>

To tilled soil, 600 g of compost and 20 g of a chemical fertilizer per 1 m² of the soil were applied. Next, the soil to which the fertilizer had been applied was covered using the magnetic sheet of Example 1 in such a manner that the surface on which the magnetic layer was formed and the soil were brought into contact with each other. Next, holes each having a diameter of about 5 cm were provided in the magnetic sheet, and 5 to 8 seeds of commercially available Japanese radish (Miura Daikon) were sowed in each one of the provided holes. Thinning was carried out after germination to stand alone, if appropriate. After Japanese radishes were allowed to stand alone, 5 g of chemical fertilizer was added per rootstock once every two weeks. After 2.5 months from sowing the seeds, 12 Japanese radishes were harvested, and the weights of leaves and roots of the harvested Japanese radishes were measured. The measured values and average value of the weights were values which are rounded to the whole number.

### <Comparative Test Example 1-1>

Japanese radishes were cultivated in the same manner as in Test Example 1 except that a commercially-available polyethylene mulching sheet (trade name: BLACH MULCH manufactured by SEKISUI FILM CO., LTD.) was used in place of the magnetic sheet of Example 1 used in Test Example 1-1. After 2.5 months from sowing the seeds, 12 Japanese radishes were harvested, and the weights of leaves and roots of the harvested Japanese radishes were measured.

### <Comparative Test Example 1-2>

Japanese radishes were cultivated in the same manner as in Test Example 1 except that the magnetic sheet of Example 1 used in Test Example 1-1 was not used (i.e., so-called "open-field cultivation"). After 2.5 months from sowing the seeds, 12 Japanese radishes were harvested, and the weights of leaves and roots of the harvested Japanese radishes were measured.

### <Comparative Test Example 1-3>

In Comparative Test Example 1-3, the magnetic sheet of Comparative Example 2 was used in place of the magnetic sheet of Example 1 used in Test Example 1-1. However, the magnetic sheet of Comparative Example 2 was broken when the magnetic sheet was tried to be laid, and the cultivation of Japanese radishes was thus not performed.

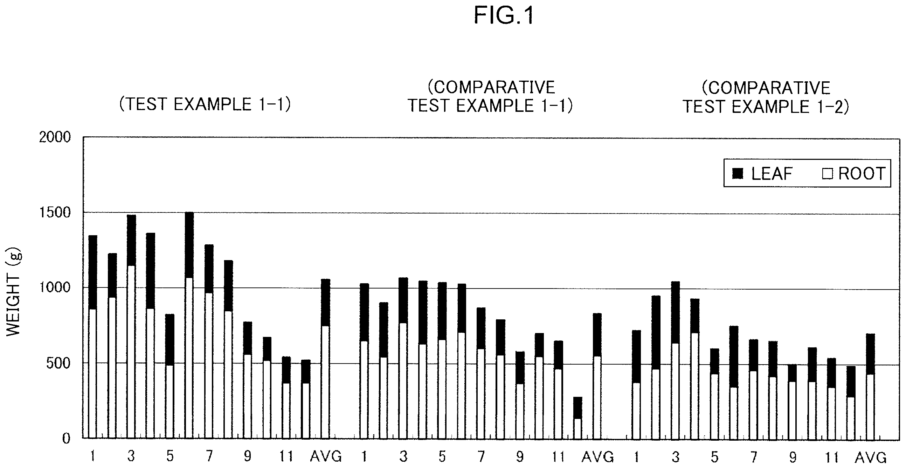

Fig. 1 is a graph showing a comparison between the weights of leaves and roots of the harvested Japanese radishes in respective Test Examples. The "AVG" in Fig. 1 means the average weight (unit: g) of the harvested 12 Japanese radishes.

Fig. 1 also shows the comparison of the average weight (unit: g) of 12 Japanese radishes harvested in respective Test Examples.

The "-" in Table 1 means that there are not corresponding items.

**Table 1**

| | | Test Example 1-1 | | Comparative Test Example 1-1 | | Comparative Test Example 1-2 | |
|---|---|---|---|---|---|---|---|
| Type of Sheet | | Magnetic sheet of Example 1 | | Commercially-available polyethylene mulching sheet | | None | |
| Magnetic Layer | Thickness (µm) | 3 | | - | | - | |
| | Product [Mrt] of Residual Magnetization (Mr) and Layer Thickness (t) (mA) | 540 | | - | | - | |
| | | Leaf | Root | Leaf | Root | Leaf | Root |
| Average Weight [AVG] (g) | | 309 | 746 | 277 | 551 | 287 | 434 |

As shown in Fig. 1 and Table 1, the weights of leaves and roots of Japanese radishes in Test Example 1-1 were heavier than the weights of leaves and roots of Japanese radishes in Comparative Test Example 1-1, and significantly heavier than the weights of leaves and roots of Japanese radishes in Comparative Test Example 1-2. In particular, significant differences in the weights of roots of Japanese radishes were recognized.

From the above results, it was revealed that the magnetic sheet of Example 1 contributed to the promotion of the growth of Japanese radishes.

### [Experiment 2: Cultivation of White Radish Sprouts]

### <Test Example 2-1>

On the bottom of a Petri dish having a diameter of 10 cm, the magnetic sheet of Example 1 was laid with the magnetic layer thereof upside. Next, on the magnetic layer of the magnetic sheet, absorbent cotton was spread over in such a manner that the thickness of the absorbent cotton was about 2 mm, and then water was poured until the absorbent cotton was immersed. On the absorbent cotton immersed in water, 120 commercially-available seeds of white radish sprouts (85% certified germination rate) were sowed. The Petri dish on which the seeds had been sowed was left in a dark place for 2 days to allow the germination of the seeds, and then moved to a light place to allow the overgrow of the white radish sprouts. Cultivation was carried out without applying a fertilizer, and water was appropriately added. The germination rate was confirmed once a day to the 7th day from the sowing of the seeds. White radish sprouts were harvested after 7 days from the sowing of the seeds, and plant lengths were measured.

### <Test Example 2-2>

White radish sprouts were cultivated in the same manner as in Test Example 2-1 except that the magnetic sheet of Example 2 was used in place of the magnetic sheet of Example 1 used in Test Example 2-1. The confirmation of germination rate and the measurement of plant length were carried out in the same manner as in Test Example 2-1.

### <Comparative Test Example 2-1>

White radish sprouts were cultivated in the same manner as in Test Example 2-1 except that the magnetic sheet of Comparative Example 1 was used in place of the magnetic sheet of Example 1 used in Test Example 2-1. The confirmation of germination rate and the measurement of plant length were carried out in the same manner as in Test Example 2-1.

### <Comparative Test Example 2-2>

White radish sprouts were cultivated in the same manner as in Test Example 2-1 except that the magnetic sheet of Example 1 used in Test Example 2-1 was not used. The confirmation of germination rate and the measurement of plant length were carried out in the same manner as in Test Example 2-1.

### <Comparative Test Example 2-3>

In Comparative Test Example 2-3, the magnetic sheet of Comparative Example 2 was used in place of the magnetic sheet of Example 1 used in Test Example 2-1. However, the magnetic sheet of Comparative Example 2 was broken when the magnetic sheet was tried to be laid on the bottom of a Petri dish, and the cultivation of white radish sprouts was thus not performed.

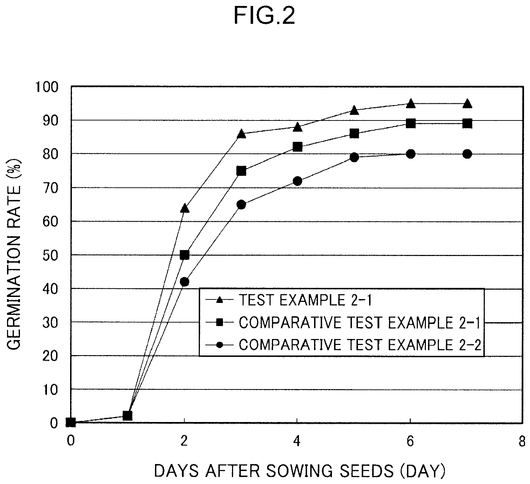

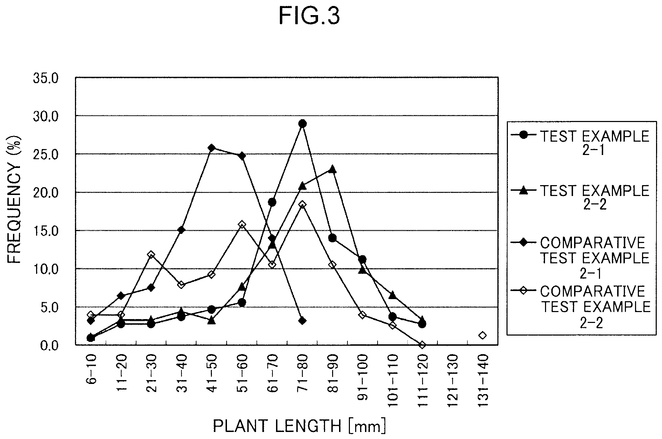

Fig. 2 is a graph showing a comparison between changes in germination rates of the harvested white radish sprouts in respective Test Examples. Fig. 3 is a graph showing a comparison between the plant lengths of the harvested white radish sprouts in respective Test Examples.

Also, the comparison of the average value of plant lengths (unit: mm) and the germination rates of white radish sprouts harvested in respective Test Examples is shown in Table 2. The average values of plant lengths and the germination rates were values which are rounded to one decimal place.

The "-" in Table 2 means that there are not corresponding items.

**Table 2**

| | | Test Example 2-1 | Test Example 2-2 | Comparative Test Example 2-1 | Comparative Test Example 2-2 |
|---|---|---|---|---|---|
| Type of Sheet | | Magnetic sheet of Example 1 | Magnetic sheet of Example 2 | Magnetic sheet of Comparative Example 1 | None |
| Magnetic Layer | Type of Magnetic powder | Iron (Fe) | Iron (Fe) | Barium ferrite (BaFe) | - |
| | Thickness (µm) | 3 | 0.12 | 0.1 | - |
| | Product [Mrt] of Residual Magnetization (Mr) and Layer Thickness (t) (mA) | 540 | 22 | 2.8 | - |
| Average Value of Plant Length (mm) | | 71.3 | 72.6 | 48.0 | 57.4 |
| Germination Rate (%) | | 95 | 89 | 90 | 80 |

As shown in Fig. 2 and Table 2, the germination rate of white radish sprouts in Test Example 2-1 was higher than the germination rate of white radish sprouts in Comparative Test Example 2-1, and significantly higher than the germination rate of white radish sprouts in Comparative Test Example 2-2.

As shown in Fig. 3 and Table 2, the average values of plant lengths of white radish sprouts in Test Example 2-1 and Test Example 2-2 were significantly longer than the average values of plant lengths of white radish sprouts in Comparative Test Example 2-1 and Comparative Test Example 2-2.

From the above results, it was revealed that the magnetic sheets of Example 1 and Example 2 contributed to the promotion of the growth of white radish sprouts.

## Claims

1. A magnetic sheet for plant cultivation, comprising:
a base material; and
a magnetic layer which is arranged on the base material and comprises a water-insoluble resin and at least one selected from the group consisting of a ferromagnetic powder and a ferrimagnetic powder, wherein a product of residual magnetization and layer thickness of the magnetic layer is 20 mA or higher,
**characterized in that**
(i) the magnetic layer has a thickness of from 0.2 µm to 10 µm,
(ii) the average long axis length of the ferromagnetic or ferrimagnetic powder is from 0.01 µm to 1.0 µm, and
(iii) the base material is a resin film formed from at least one resin selected from the group consisting of a polyester, a polyethylene, a polypropylene, a triacetylcellulose, a polystyrene, a polycarbonate, a polyimide, a polyamide, a polyamideimide, a polysulfone, a polyvinyl chloride, a polyvinylidene chloride, a polyacrylonitrile, a polyphenylene sulfide, a polyether imide, and a polyether sulfone.

2. The magnetic sheet for plant cultivation according to claim 1, having a breaking strength of 20 MPa or higher, and a breaking elongation of 30% or higher.

3. The magnetic sheet for plant cultivation according to claim 1 or 2, wherein the magnetic layer has a squareness ratio of 0.6 or higher.

4. A method of plant cultivation, comprising using a magnetic sheet for plant cultivation, the magnetic sheet comprising: a base material; and a magnetic layer which is arranged on the base material and comprises a water-insoluble resin and at least one selected from the group consisting of a ferromagnetic powder and a ferrimagnetic powder, wherein a product of residual magnetization and layer thickness of the magnetic layer is 20 mA or higher,
**characterized in that**
(i) the magnetic layer has a thickness of from 0.2 µm to 10 µm,
(ii) the average long axis length of the ferromagnetic or ferrimagnetic powder is from 0.01 µm to 1.0 µm, and
(iii) the base material is a resin film formed from at least one resin selected from the group consisting of a polyester, a polyethylene, a polypropylene, a triacetylcellulose, a polystyrene, a polycarbonate, a polyimide, a polyamide, a polyamideimide, a polysulfone, a polyvinyl chloride, a polyvinylidene chloride, a polyacrylonitrile, a polyphenylene sulfide, a polyether imide, and a polyether sulfone.

5. The method of plant cultivation according to claim 4, wherein the magnetic sheet for plant cultivation is used for soil cultivation or hydroponics.

6. The method of plant cultivation according to claim 4 or claim 5, comprising:
covering soil with the magnetic sheet for plant cultivation; and
sowing a seed or planting a seedling in a hole provided in the magnetic sheet which is covering the soil.

7. The method of plant cultivation according to claim 4 or claim 5, comprising:
laying the magnetic sheet for plant cultivation on the bottom of a hydroponic bed; and
sowing a seed or planting a seedling in the hydroponic bed on which the magnetic sheet has been laid.

8. The method of plant cultivation according to claim 4 or claim 5, comprising:
covering a surface of a hydroponic solution, which has been supplied to a hydroponic bed, with the magnetic sheet for plant cultivation; and
sowing a seed or planting a seedling in a hole provided in the magnetic sheet which is covering the surface of the hydroponic solution.

9. The method of plant cultivation according to any one of claims 4 to 8, wherein the magnetic sheet has a breaking strength of 20 MPa or higher, and a breaking elongation of 30% or higher.

10. The method of plant cultivation according to any one of claims 4 to 9, wherein the magnetic layer has a squareness ratio of 0.6 or higher.

## Patentansprüche

1. Magnetisches Flachmaterial zur Pflanzenzucht, aufweisend:
ein Basismaterial; und
eine magnetische Schicht, die auf dem Basismaterial angeordnet ist und ein wasserunlösliches Harz und mindestens ein Pulver aufweist, das ausgewählt ist aus der Gruppe, die aus einem ferromagnetischen Pulver und einem ferrimagnetischen Pulver besteht, wobei das Produkt von Restmagnetisierung und Schichtdicke der magnetischen Schicht 20 mA oder höher ist,
**dadurch gekennzeichnet, dass**
(i) die magnetische Schicht eine Dicke von 0,2 µm bis 10 µm hat,
(ii) die durchschnittliche Länge der Langachse des ferromagnetischen oder ferrimagnetischen Pulvers von 0,01 µm bis 1,0 µm beträgt, und
(iii) das Basismaterial ein Harzfilm ist, der ausgebildet ist aus mindestens einem Harz, das ausgewählt ist aus der Gruppe, die aus einem Polyester, einem Polyethylen, Polypropylen, einer Triacetylcellulose, einem Polystyrol, einem Polycarbonat, einem Polyimid, einem Polyamid, einem Polyamidimid, einem Polysulfon, einem Polyvinylchlorid, einem Polyvinylidenchlorid, einem Polyacrylnitril, einem Polyphenylensulfid, einem Polyetherimid und einem Polyethersulfon besteht.

2. Magnetisches Flachmaterial zur Pflanzenzucht nach Anspruch 1, das eine Bruchfestigkeit von 20 MPa oder höher und eine Bruchdehnung von 30% oder höher hat.

3. Magnetisches Flachmaterial zur Pflanzenzucht nach Anspruch 1 oder 2, wobei die magnetische Schicht ein Rechteckverhältnis von 0,6 oder höher hat.

4. Verfahren zur Pflanzenzucht, aufweisend die Verwendung eines magnetischen Flachmaterials zur Pflanzenzucht wobei das magnetische Flachmaterial aufweist: ein Basismaterial; und eine magnetische Schicht, die auf dem Basismaterial angeordnet ist und ein wasserunlösliches Harz und mindestens ein Pulver aufweist, das ausgewählt ist aus der Gruppe, die aus einem ferromagnetischen Pulver und einem ferrimagnetischen Pulver besteht, wobei das Produkt von Restmagnetisierung und Schichtdicke der magnetischen Schicht 20 mA oder höher ist, **dadurch gekennzeichnet, dass**
(i) die magnetische Schicht eine Dicke von 0,2 µm bis 10 µm hat,
(ii) die durchschnittliche Länge der Langachse des ferromagnetischen oder ferrimagnetischen Pulvers von 0,01 µm bis 1,0 µm beträgt, und
(iii) das Basismaterial ein Harzfilm ist, der ausgebildet ist aus mindestens einem Harz, das ausgewählt ist aus der Gruppe, die aus einem Polyester, einem Polyethylen, Polypropylen, einer Triacetylcellulose, einem Polystyrol, einem Polycarbonat, einem Polyimid, einem Polyamid, einem Polyamidimid, einem Polysulfon, einem Polyvinylchlorid, einem Polyvinylidenchlorid, einem Polyacrylnitril, einem Polyphenylensulfid, einem Polyetherimid und einem Polyethersulfon besteht.

5. Verfahren zur Pflanzenzucht nach Anspruch 4, wobei das magnetische Flachmaterial zur Pflanzenzucht zur Kultur in Erde oder zur Hydrokultur verwendet wird.

6. Verfahren zur Pflanzenzucht nach Anspruch 4 oder Anspruch 5, aufweisend:
Bedecken von Erde mit dem magnetischen Flachmaterial zur Pflanzenzucht; und
Säen eines Samens oder Pflanzen eines Setzlings in ein Loch, das in dem magnetischen Flachmaterial, das die Erde bedeckt, vorgesehen ist.

7. Verfahren zur Pflanzenzucht nach Anspruch 4 oder Anspruch 5, aufweisend:
Legen des magnetischen Flachmaterials zur Pflanzenzucht auf den Boden eines Hydrokulturbetts; und
Säen eines Samens oder Pflanzen eines Setzlings in das Hydrokulturbett, auf das das magnetische Flachmaterial gelegt wurde.

8. Verfahren zur Pflanzenzucht nach Anspruch 4 oder Anspruch 5, aufweisend:
Bedecken einer Oberfläche einer Hydrokulturlösung, die einem Hydrokulturbett zugeführt wurde, mit dem magnetischen Flachmaterial zur Pflanzenzucht; und
Säen eines Samens oder Pflanzen eines Setzlings in ein Loch, das in dem magnetischen Flachmaterial, das die Oberfläche der Hydrokulturlösung bedeckt, vorgesehen ist.

9. Verfahren zur Pflanzenzucht nach einem der Ansprüche 4 bis 8, wobei das magnetische Flachmaterial eine Bruchfestigkeit von 20 MPa oder höher und eine Bruchdehnung von 30% oder höher hat.

10. Verfahren zur Pflanzenzucht nach einem der Ansprüche 4 bis 9, wobei die magnetische Schicht ein Rechteckverhältnis von 0,6 oder höher hat.

## Revendications

1. Feuille magnétique pour la culture de plantes, comprenant :
un matériau de base, et
une couche magnétique, laquelle est agencée sur le matériau de base et comprend une résine insoluble dans l'eau et au moins un élément sélectionné parmi le groupe consistant en une poudre ferromagnétique et une poudre ferrimagnétique, dans laquelle un produit entre une aimantation résiduelle et une épaisseur de couche de la couche magnétique est supérieur ou égal à 20 mA,
**caractérisée en ce que**
(i) la couche magnétique présente une épaisseur allant de 0,2 µm à 10 µm ;
(ii) la longueur d'axe long moyenne de la poudre ferromagnétique ou ferrimagnétique s'étend de 0,01 µm à 1,0 µm, et
(iii) le matériau de base est un film de résine formé d'au moins une résine sélectionnée parmi le groupe consistant en un polyester, un polyéthylène, un polypropylène, un triacétate cellulosique, un polystyrène, un polycarbonate, un polyimide, un polyamide, un polyamideimide, une polysulfone, un polychlorure de vinyle, un polychlorure de vinylidène, un polyacrylonitrile, un polyphénylène sulfure, un polyétherimide, et une polyéthersulfone.

2. Feuille magnétique pour la cultivation de plantes selon la revendication 1, présentant une résistance à la rupture supérieure ou égale à 20 MPa, et un allongement de rupture supérieur ou égal à 30 %.

3. Feuille magnétique pour la cultivation de plantes selon la revendication 1 ou 2, dans laquelle la couche magnétique présente un taux de rectangularité supérieur ou égal à 0,6.

4. Procédé de culture de plantes, comprenant l'utilisation d'une feuille magnétique pour la culture de plantes, la feuille magnétique comprenant : un matériau de base, et une couche magnétique, laquelle est agencée sur le matériau de base et comprend une résine insoluble dans l'eau et au moins un élément sélectionné parmi le groupe consistant en une poudre ferromagnétique et une poudre ferrimagnétique, dans lequel un produit entre une aimantation résiduelle et une épaisseur de couche de la couche magnétique est supérieur ou égal à 20 mA,
**caractérisé en ce que**
(i) la couche magnétique présente une épaisseur allant de 0,2 µm à 10 µm ;
(ii) la longueur d'axe long moyenne de la poudre ferromagnétique ou ferrimagnétique s'étend de 0,01 µm à 1,0 µm, et
(iii) le matériau de base est un film de résine formé d'au moins une résine sélectionnée parmi le groupe consistant en un polyester, un polyéthylène, un polypropylène, un triacétate cellulosique, un polystyrène, un polycarbonate, un polyimide, un polyamide, un polyamideimide, une polysulfone, un polychlorure de vinyle, un polychlorure de vinylidène, un polyacrylonitrile, un polyphénylène sulfure, un polyétherimide, et une polyéthersulfone.

5. Procédé de culture de plantes revendication 4, dans lequel la feuille magnétique pour la culture de plantes est utilisée pour la culture de sols ou la culture hydroponique.

6. Procédé de culture de plantes revendication 4 ou 5, comprenant les étapes consistant à :
recouvrir le sol avec la feuille magnétique pour la culture de plantes, et
ensemencer avec une graine ou planter un semis dans un trou prévu dans la feuille magnétique qui recouvre le sol.

7. Procédé de culture de plantes revendication 4 ou 5, comprenant les étapes consistant à :
poser la feuille magnétique pour la culture de plantes sur le fond d'un lit hydroponique, et
ensemencer avec une graine ou planter un semis dans le lit hydroponique sur lequel la feuille magnétique a été posée.

8. Procédé de culture de plantes revendication 4 ou 5, comprenant les étapes consistant à :
recouvrir une surface d'une solution hydroponique, laquelle a été fournie à un lit hydroponique, avec la feuille magnétique pour la culture de plantes, et
ensemencer avec une graine ou planter un semis dans un trou prévu dans la feuille magnétique, laquelle recouvre la surface de la solution hypotonique.

9. Procédé de culture de plantes selon l'une quelconque des revendications 4 à 8, dans lequel la feuille magnétique présente une résistance à la rupture supérieure ou égale à 20 MPa, et un allongement de rupture supérieur ou égal à 30 %.

10. Procédé de culture de plantes selon l'une quelconque des revendications 4 à 9, dans lequel la feuille magnétique présente un taux de rectangularité supérieur ou égal à 0,6.
